(19) Europäisches Patentamt
European Patent Office
Office européen des brevets

(11) **EP 3 451 775 B1**

(12) **EUROPEAN PATENT SPECIFICATION**

(45) Date of publication and mention of the grant of the patent:
**24.02.2021  Bulletin 2021/08**

(21) Application number: **17788831.0**

(22) Date of filing: **28.04.2017**

(51) Int Cl.:
**H04W 72/12** *(2009.01)*    **H04B 7/06** *(2006.01)*

(86) International application number:
**PCT/CN2017/082569**

(87) International publication number:
**WO 2017/186179 (02.11.2017 Gazette 2017/44)**

(54) **DOWNLINK DATA TRANSMISSION METHOD, APPARATUS AND BASE STATION**

VERFAHREN ZUR ÜBERTRAGUNG VON DOWNLINK-DATEN, VORRICHTUNG UND BASISSTATION

PROCÉDÉ ET APPAREIL DE TRANSMISSION DE DONNÉES DE LIAISON DESCENDANTE, ET STATION DE BASE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **29.04.2016  CN 201610281668**

(43) Date of publication of application:
**06.03.2019  Bulletin 2019/10**

(73) Proprietor: **ZTE Corporation**
**Shenzhen, Guangdong 518057 (CN)**

(72) Inventor: **WEI, Jidong**
**Shenzhen, Guangdong 518057 (CN)**

(74) Representative: **Aipex B.V.**
**P.O. Box 30223**
**3001 DE Rotterdam (NL)**

(56) References cited:
**CN-A- 101 459 942       CN-A- 102 916 732**
**CN-A- 103 023 545       US-A1- 2009 016 312**
**US-A1- 2010 074 183       US-A1- 2013 301 454**
**US-A1- 2015 341 105**

## Description

## TECHNICAL FIELD

The present invention relates to the technical field of communications and, for example, to a downlink data transmission method and apparatus.

## BACKGROUND

With the development of wireless communication technologies, transmission at a very high speed is required for various fields and scenarios. In some special scenarios, such as high-speed scenarios and airline scenarios, the requirement on frequency synchronization is much higher. In a case of a low center frequency, the influence of Doppler frequency offset caused by movement is not a challenge to Long Term Evolution (LTE) technology. However, in a case of high or ultrahigh center frequency, the Doppler frequency offset in the high-speed scenarios can seriously affect the system performance, which brings great challenge in solving the problem of frequency offset estimation.

At the same time, to avoid frequent switching of high-speed cells, super cells are usually adopted in network distribution, which brings great influence to the downlink performance. The influence may be embodied in that the terminal receives at least one pair of signals in different directions of arrival. Due to the difference of Doppler frequency offset between the two signals, the superposition of the signals causes drop of signal power, thereby causing the degradation of downlink performance.

To solve this problem, pre-compensation for frequency offset is referred in some materials or is adopted as a common method. However, in a case of multiple terminals, various compensation methods are difficult to ensure that all users have been taken into account. The various compensation methods may achieve better compensation effects considering from a perspective of scheduling, but it brings a big shock to the Quality of Service (QOS), the number of scheduled users and the implementation complexity. Further relevant technologies are also known from US2013301454A1 (SEOL JI-YUN [KR] ET AL), 14 November 2013 (2013-11-14), US2009016312A1 (TAO ZHIFENG [US] ET AL), 15 January 2009 (2009-01-15), and US2015341105A1 (YU CHIA-HAO [CN, TW] ET AL), 26 November 2015 (2015-11-26).

## SUMMARY

The present invention provides a downlink data transmission method and apparatus for solving the problem in which the superposition of downlink signals affects the communication quality for reasons of frequency offset and phase of the downlink signals in the existing art.

To solve the above technical problem, an embodiment of the present invention provides a downlink data transmission method, which includes:

acquiring status information on whether or not one or more antenna groups in an uplink activation set of a terminal perform downlink data transmission, wherein the uplink activation set of the terminal refers to a set of antenna groups with strong signals selected for the base station;

transmitting, according to the status information on whether or not the one or more antenna groups in the uplink activation set of the terminal perform downlink data transmission, downlink data to the terminal on an antenna group configured to transmit the downlink data in the uplink activation set;

wherein the acquiring the status information on whether or not the one or more antenna groups in the uplink activation set of the terminal perform the downlink data transmission comprises:

acquiring measurement information obtained by monitoring status of each antenna group in the uplink activation set and the terminal;

determining, according to the measurement information, whether or not to enable a selective downlink data transmission function of the antenna groups in the uplink activation set; and

in response to determining to enable the selective downlink data transmission function of the antenna groups, acquiring the status information on whether or not the each antenna group in the uplink activation set performs data transmission;

wherein in a case where the uplink activation set comprises a plurality of antenna groups, and the measurement information comprises a frequency offset value of the each antenna group in the uplink activation set, the determining, according to the measurement information, whether or not to enable the selective downlink data transmission function of the antenna groups in the uplink activation set comprises: in a case where an absolute value of the frequency offset value of at least one antenna group in the uplink activation set is greater than or equal to a first preset threshold value, enabling the selective downlink data transmission function of the antenna groups; or

in a case where an absolute value of a difference of the frequency offset value between two antenna groups in the uplink activation set is greater than or equal to a second preset threshold value, enabling the selective downlink data transmission function of the antenna groups; or

in a case where the absolute value of the frequency offset value of at least one antenna group in the uplink activation set is greater than or equal to a third preset threshold value as well as the absolute value of the frequency offset value of the at least one antenna group is not equal to the frequency offset value of the at least one antenna group, enabling the selective downlink data transmission function of the antenna groups.

Another embodiment of the present invention provides a downlink data transmission apparatus, which includes:
a determining module, which is configured to acquire status information on whether or not one or more antenna groups in the uplink activation set of a terminal perform downlink data transmission, wherein the uplink activation set of the terminal refers to a set of antenna groups with strong signals selected for the base station; a transmitting module, which is configured to transmit, according to the status information on whether or not the one or more antenna groups in the uplink activation set of the terminal performs the downlink data transmission, downlink data to the terminal on an antenna group configured to transmit the downlink data in the uplink activation set; the determining module comprises a first acquiring unit, a determining unit and a second acquiring unit; wherein the first acquiring unit is configured to acquire measurement information obtained by monitoring status of each antenna group in the uplink activation set and the terminal; the determining unit is configured to determine, according to the measurement information, whether or not to enable a selective downlink data transmission function of the antenna groups in the uplink activation set; and the second acquiring unit is configured to: in response to determining to enable the selective downlink data transmission function of the antenna groups, acquire the status information on whether or not the each antenna group in the uplink activation set performs data transmission; wherein in a case where the uplink activation set comprises a plurality of antenna groups, and the measurement information comprises a frequency offset value of the each antenna group in the uplink activation set, the determining unit is configured to: in a case where an absolute value of the frequency offset value of at least one antenna group in the uplink activation set is greater than or equal to a first preset threshold value, enable the selective downlink data transmission function of the antenna groups; or in a case where an absolute value of a difference of the frequency offset value between two antenna groups in the uplink activation set is greater than or equal to a second preset threshold value, enable the selective downlink data transmission function of the antenna groups; or in a case where the absolute value of the frequency offset value of at least one antenna group in the uplink activation set is greater than or equal to a third preset threshold value as well as the absolute value of the frequency offset value of the at least one antenna group is not equal to the frequency offset value of the at least one antenna group, enable the selective downlink data transmission function of the antenna groups.

## BRIEF DESCRIPTION OF DRAWINGS

FIG. 1 is a flowchart one of a downlink data transmission method.
FIG. 2 is a flowchart two of a downlink data transmission method.
FIG. 3 is a schematic diagram of modules of a downlink data transmission apparatus; and
FIG. 4 is a structure diagram of an electronic device.

## DETAILED DESCRIPTION

The present invention will be described in detail in connection with embodiments and drawings, from which technical solutions and advantages of the present invention will be more apparent.

The present invention provides a downlink data transmission method, apparatus and base station for solving the problem in which the superposition of downlink signals affects the communication quality for reasons of frequency offset and phase of the downlink signals in the existing art.

Embodiment one

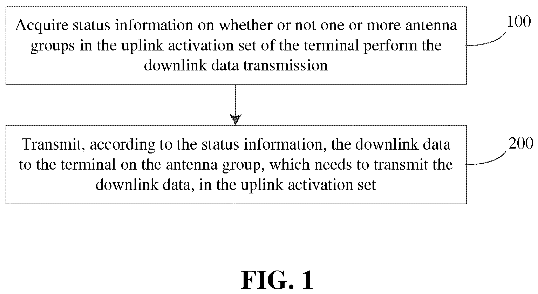

As shown in FIG. 1, a downlink data transmission method in the embodiment one includes steps described below.

In step 100, status information on whether or not one or more antenna groups in an uplink activation set of a terminal perform downlink data transmission is acquired.

It is to be noted that the uplink activation set of the terminal is a set of antenna groups with strong signals and selected for the base station. The status information is a status of transmitting downlink data or a status of not transmitting downlink data.

In step 200, according to the status information, the downlink data is transmitted to the terminal on an antenna group, which needs to transmit the downlink data, in the uplink activation set.

The embodiment of the present invention screens out the antenna group which is able to transmit the downlink data from the antenna groups in the uplink activation set of the terminal, thereby avoiding that the inverse-phase superposition of signals in the transmission of downlink data on the antenna group when transmitting the downlink data affects communication quality. The downlink data transmission method provided by the present invention guarantees an precise reception of data and communication quality between the base station and the terminal.

It is to be noted that in the implementation of step 100, the following steps may be included.

In step 110, measurement information, which is obtained by monitoring status of each antenna group in the uplink activation set and the terminal, is acquired.

It is to be noted that the measurement information includes, but is not limited to be one or more of a frequency offset value, signal quality, a SINR, a signal power, a path loss and status information of the terminal (the status of the terminal in a near point position, a midpoint position or a far point position).

It is to be noted that generally a terminal, whose path loss is less than or equal to a first preset value when receiving the downlink data, is determined to be the in the near point position; a terminal, whose path loss is around a second preset value, is determined to be in the midpoint position; and a terminal with other path losses is determined to be in the far point position. For example, in practice, the status information of the terminal may be determined in the manner described below. A terminal, whose path loss is less than or equal to 80dBm when receiving the downlink data, is determined to be in the near point; a terminal, whose path loss is around 90dBm, is determined to be in the midpoint; and a terminal with other path losses is determined to be in the far point position.

In step 120, whether or not to enable a selective downlink data transmission function of the antenna groups in the uplink activation set is determined according to the measurement information.

In step 130, the status information on whether or not the each antenna group in the uplink activation set performs a data transmission if the selective downlink data transmission function of the antenna group needs to be enabled is acquired.

It is to be noted that the uplink activation set may be constituted by one or more antenna groups. When the uplink activation set of the terminal has only one antenna group, the downlink data of this terminal may be only transmitted on this activation antenna group. That is, the downlink data of this terminal is not transmitted on corresponding resources of other antenna groups, or a transmitting power of the downlink data of this terminal on other antenna groups may be decreased by adjusting a power factor; or the downlink data of this terminal may be transmitted on other antenna groups, including adjusting the power factor, and no special processing is performed. It is to be noted that, the case where the uplink activation set only has one antenna group is not further limited in this embodiment. The subsequent description of this embodiment is explained by way of the uplink activation set including multiple antenna groups (two or more antenna groups).

The measurement information including different parameters is used as an example for illustration below.

In case one, when the measurement information only includes the frequency offset value of each antenna group in the uplink activation set, the implementation mode of the step 120 may be as described below.

If an absolute value of the frequency offset value of at least one antenna group in the uplink activation set is greater than or equal to a first preset threshold value, the selective downlink data transmission function of the antenna groups is enabled.

Alternatively, if the absolute value of a difference of the frequency offset value between two antenna groups in the uplink activation set is greater than or equal to a second preset threshold value, the selective downlink data transmission function of the antenna groups is enabled.

Alternatively, if the absolute value of the frequency offset value of at least one antenna group in the uplink activation set is greater than or equal to a third preset threshold value and the absolute value of the frequency offset value of the at least one antenna group is not equal to the frequency offset value of the at least one antenna grup, the selective downlink data transmission function of the antenna group is enabled.

It is to be noted that, in this case, three manners of enabling the selective downlink data transmission function of the antenna groups are provided. The simplest manner is to enabling the selective downlink data transmission function of the antenna groups when the absolute value of the frequency offset value of at least one antenna group in the uplink activation set is greater than or equal to the first preset threshold value. Other two precise manners are: enabling the selective downlink data transmission function of the antenna group when the absolute value of the frequency offset value of the at least one antenna group in the uplink activation set is greater than or equal to the third preset threshold value as well as the absolute value of the frequency offset value of the at least one antenna group is not equal to the frequency offset value of the at least one antenna group; alternatively, enabling the selective downlink data transmission function of the antenna group when the absolute value of the difference of frequency offset value between two antenna groups in the uplink activation set is greater than or equal to the second preset threshold value. The determining manner may be selected according to practical application.

It is to be noted that the first preset threshold value, the second threshold value and the third preset threshold value may all be set according to the practical application.

In this case, the selective downlink data transmission function of the antenna groups is enabled. Then status information of a first antenna group in the uplink activation set is labeled as a status of transmitting data. That is, the antenna group with the strongest signal is selected as the antenna group configured to transmit the downlink data of the terminal. Other antenna groups in the uplink activation set not transmit the downlink data of the terminal. The antenna group with the strongest signal may be called as a main antenna group. It is to be noted that one terminal has only one main antenna group.

In case two, when the measurement information includes not only the frequency offset value of each antenna group in the uplink activation set, but also signal quality of the each antenna group, the implementation mode of the step 120 may be as described below.

If the absolute value of the frequency offset value of at least one antenna group in the uplink activation set is greater than or equal to the first preset threshold value and an absolute value of a difference of the signal quality between two antenna groups is less than or equal to a fourth threshold value, the selective downlink data transmission function of the antenna groups is enabled.

Alternatively, if the absolute value of the difference of the frequency offset value between the two antenna groups in the uplink activation set is greater than or equal to the second preset threshold value, and the absolute value of the difference of the signal quality between two antenna groups is less than or equal to the fourth threshold value, the selective downlink data transmission function of the antenna groups is enabled.

Alternatively, if the absolute value of the frequency offset value of at least one antenna group in the uplink activation set is greater than or equal to the third preset threshold value, the absolute value of the frequency offset value of the at least one antenna group is not equal to the frequency offset value of the at least one antenna group, and the absolute value of the difference of the signal quality between two antenna groups in the uplink activation set is less than or equal to the fourth threshold value, the selective downlink data transmission function of the antenna groups is enabled.

It is to be noted that the case two is a determining manner added under a determining manner of case one. That is, when the determining manner of the case one is satisfied, the frequency offset values on the antenna groups satisfies for the condition for enabling the selective downlink data transmission function of the antenna groups, but if the signals of the main antenna group is much stronger than the signals of other antenna groups, and there is no strong interference caused by superposition of signals and the selective downlink data transmission function of the antenna groups may not be enabled. Only when the difference between the signal of the main antenna group and the signal of at least one other antenna group is not significant, the selective downlink data transmission function of the antenna groups is enabled.

It is to be noted that, in this case, the selective downlink data transmission function of the antenna groups is enabled, the antenna group with the strongest signal is selected as the antenna group configured to transmit the downlink data of the terminal and other antenna groups in the uplink activation set do not transmit the downlink data of the terminal.

In case three, when the measurement information only includes the frequency offset values of a preset number of antenna groups in the uplink activation set (the measurement information only includes frequency offset values of part of the antenna groups), and the implementation mode of the step 120 may be as described below.

If the absolute value of the frequency offset value of the at least one antenna group in the uplink activation set is greater than or equal to a fifth preset threshold value, the selective downlink data transmission function of the antenna groups is enabled.

In this case, the selective downlink data transmission function of the antenna groups is enabled as long as the frequency offset value of one antenna group is greater than or equal to the preset threshold value.

In this case, the selective downlink data transmission function of the antenna groups is enabled, the antenna group with the strongest signal is selected as the antenna group configured to transmit the downlink data of the terminal and other antenna groups in the uplink activation set do not transmit the downlink data of the terminal.

In case four, when the measurement information only includes the signal quality of each antenna group in the uplink activation set, the implementation mode of the step 120 may be as described below.

If the absolute value of the difference of the signal quality between two antenna groups in the uplink activation set is greater than or equal to a sixth threshold value, the selective downlink data transmission function of the antenna groups is enabled.

In this case, if the absolute value of the difference of the signal quality between two antenna groups is less than or equal to the sixth threshold value, the selective downlink data transmission function of the antenna groups is enabled, the antenna group with the strongest signal is selected as the antenna group configured to transmit the downlink data of the terminal and other antenna groups in the uplink activation set do not transmit the downlink data of the terminal. If the absolute value of the difference of the signal quality between two antenna groups is greater than the sixth threshold value, then the selective downlink data transmission function of the antenna groups is not enabled.

In case five, when the measurement information only includes status information of the terminal, the implementation mode of the step 120 may be as described below.

When the status information of the terminal indicates that the terminal is not in a near point position, the selective downlink data transmission function of the antenna groups is enabled.

In this case, when it is determined that the terminal is in a near point position, the selective downlink data transmission function of the antenna groups is not enabled. However, when it is determined that the terminal is not in a near point position (the terminal is in a midpoint position or a far point position), the selective downlink data transmission function of the antenna groups is enabled, the antenna group with the strongest signal is selected to transmit the downlink data of the terminal and other antenna groups in the uplink activation set do not transmit the downlink data of the terminal.

In case six, when the measurement information includes a only signal to interference plus noise ratio (SINR) or a signal power of the each antenna group in the uplink activation set, the implementation mode of the step 120 may be as described below.

If the SINR or the signal power of the each antenna group in the uplink activation set is less than or equal to a seven preset threshold value, the selective downlink data transmission function of the antenna group is enabled.

It is to be noted that, when the SINR or the signal power of the each antenna group in the uplink activation set is less than or equal to the seven preset threshold value, the selective downlink data transmission function of the antenna groups is enabled, the antenna group with the strongest signal is selected to transmit the downlink data of the terminal and other antenna groups in the uplink activation set do not transmit the downlink data of the terminal. Alternatively, status information of a second antenna group in the uplink activation set is labeled as a status of not transmitting data. That is, only the antenna group with a secondary signal condition does not transmit the downlink data of the terminal, and the other antenna groups transmit the downlink data of the terminal.

In case seven, when the measurement information only includes the path loss of the each antenna group in the uplink activation set, the implementation mode of the step 120 may be as described below.

If the path loss of the each antenna group in the uplink activation set is greater than or equal to an eighth preset threshold value, the selective downlink data transmission function of the antenna groups is enabled.

It is to be noted that, when the path loss of the each antenna group in the uplink activation set is less than or equal to the eighth preset threshold value, the selective downlink data transmission function of the antenna groups is enabled, the antenna group with the strongest signal is selected to transmit the downlink data of the terminal and other antenna groups in the uplink activation set do not transmit the downlink data of the terminal. Alternatively, only the antenna group with the secondary signal condition does not transmit the downlink data of the terminal, and the other antenna groups transmit the downlink data of the terminal.

It is to be noted that when the measurement information includes multiple parameters, one parameter may be only selected to determine whether or not to enable the selective downlink data transmission function of the antenna groups. When the measurement information has the frequency offset value, the frequency offset value may be a determining parameter. The determination of superposition may be performed based on multiple parameters according to the above cases. For example, when the measurement information has the frequency offset value and the status of the terminal, the determination is performed based on the frequency offset value first and then the status of the terminal.

It is to be noted that after the status information of the each antenna group in the uplink activation set is determined, the status information needs to be transmitted to a physical layer (that is, a downlink transmitting end) through an air interface or a signaling. The downlink transmitting end performs transmission processing on the antenna group not to transmit the downlink data of the terminal on the basis of the status information, and then transmits the downlink data to the terminal. The implementation mode of the step 200 may be as described below.

In step 210, according to the status information of the antenna group, transmitting-end processing is performed on data of the antenna group, which does not need to transmit the downlink data, in the uplink activation set.

In step 220, after the transmitting-end processing is performed, the downlink data is transmitted to the terminal on the antenna group, which needs to transmit downlink data, in the uplink activation set.

It is to be noted that the antenna group, which is labeled as not transmitting the downlink data of the terminal, may be processed in the following manner. The implementation mode of the step 210 may be as described below.

When the status information of the antenna group is the status of not transmitting the downlink data, a resource block not in the antenna group is controlled to perform a data transmission.

Alternatively, all data in the resource block in the antenna group is cleared.

Alternatively, transmitting power of the data in the resource block in the antenna group is decreased.

It is to be noted that the processing of clearing or decreasing transmitting power may be performed on only valid data in the resource block, or on reference data and valid data in the resource block. That is, the data, on which the clearing or decreasing the transmitting power, may be only the valid data on the resource block, or may also be the reference data and valid data. It is to be noted that when UE-level reference data (such as DM-RS, that is, UE-level dedicated reference data) is included in the resource block, during the processing, the processing of clearing or decreasing transmitting power needs to be performed on the UE-level reference data and the valid data together. When cell-level reference data (such as CRS, that is, cell-level dedicate reference data) is included on the resource block, during the processing, the processing of clearing or decreasing transmitting power may be performed on the cell-level reference data and valid data together, or the processing of clearing or decreasing transmitting power may be not performed on the cell-level reference data and valid data.

It is to be further noted that for the antenna data labeled as not transmitting the downlink data of the terminal in the uplink activation set and inactivated antenna groups, no special processing may not be performed on the downlink data of the terminal on these antenna groups, and data may be transmitted in a normal manner.

After the transmission processing is performed, the downlink data is transmitted then. The implementation mode of the step 220 may be as described below.

After the transmitting-end processing is performed, frequency-domain data on each antenna group in the uplink activation set is transformed into time-domain data, and the time-domain data is transmitted to the terminal through the air interface, so that the terminal receives the downlink data on the antenna group transmitting the downlink data.

It is to be noted that when the antenna groups transmit the data, all antenna groups transmit signals, and the downlink data of the terminal is carried just on some antenna groups.

Optionally, in the step 220, when the downlink data is transmitted, a frequency offset correction may be performed on transmitted data. The frequency offset correction may adopt an antenna-group-level frequency offset correction, and may also adopt a terminal-level frequency offset correction. The two frequency offset correction manners may also adopt a time-domain correction or a frequency-domain correction. Using which determination manner may be selected according to the practical applications, and is not limited in this embodiment.

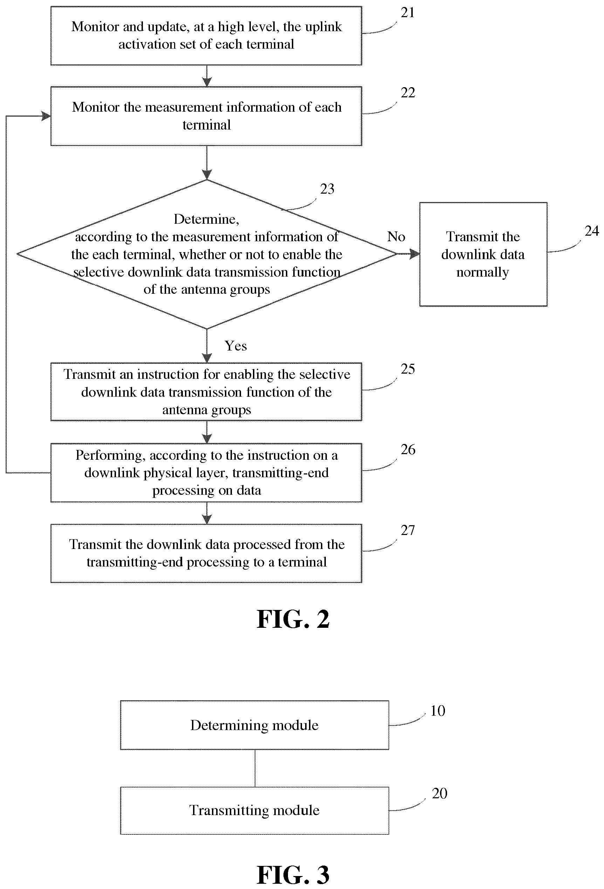

It is to be noted that the downlink data transmission may be applied to a base station side. As shown in FIG. 2, the processing flow of the downlink data transmission in this embodiment is described below.

In step 21, a high level of the base station monitors and updates the uplink activation set of each terminal.

In step 22, the measurement information of the each terminal is monitored.

In step 23, whether or not to enable the selective downlink data transmission function of the antenna groups in the uplink activation set corresponding to the terminal is determined according to the measurement information of the each terminal. If it is determined not to enable the function, the process goes to step 24; otherwise, the process goes to step 25.

In step 24, the downlink data is transmitted in a normal manner.

In step 25, an instruction for enabling the selective downlink data transmission function of the antenna groups is sent. The instruction includes the status information of transmitting the downlink data or not transmitting the downlink data of the antenna group in the uplink activation set corresponding to the terminal.

In step 26, a downlink physical layer performs transmitting-end processing on data according to the instruction.

In step 27, the base station transmits the downlink data processed from the transmitting-end processing to a corresponding terminal.

It is to be noted that when the base station transmits the downlink data, the measurement information of the terminal needs to be monitored in real time so as to determine whether or not to continue the transmission of the downlink data in the current manner.

In an application scenario of super cells for a high-speed railway, the network is distributed in a chain-shape and in a manner of four-antenna group. The implementation of this embodiment is described below with examples.

In step 1, the uplink activation set as well as measurement information, such as the signal power, SINR and frequency offset of all user terminals, are monitored. If activation antenna groups of a first terminal (UE0) are a first antenna group (CP0) and a second antenna group (CP1), the main antenna group is CP0, and the two antenna groups maintain valid frequency offset information $FO_{UE0}^{cp0}$ and $FO_{UE0}^{cp1}$ respectively. The activation antenna groups of a second terminal (UE1) are the CP1 and a third antenna group (CP2). The main antenna group is the CP1, and only the CP1 maintains a valid frequency offset value $FO_{UE1}^{cp1}$. The activation antenna group of a third terminal (UE2) is a fourth antenna group (CP3) and the frequency value maintained thereon is $FO_{UE2}^{cp3}$. The activation antenna groups of a fourth terminal are the CP2 and the CP3, which both not maintain the valid frequency offset value and the SINR reported on each antenna group is $SINR_{UE3}^{cp2}$ and $SINR_{UE3}^{cp3}$ respectively.

Based on the status information of each terminal maintained above, if all above-mentioned users have been scheduled on a current downlink subframe, uplink information maintained by the each terminal is used for selecting the antenna group for transmission. If the absolute values of the valid frequency offset values $FO_{UE0}^{cp0}$ and $FO_{UE0}^{cp1}$ maintained on the two antenna groups of the UE0 are both greater than F hertz (a threshold value determined from actual measurement), the selective downlink data transmission function of the antenna groups in the UE0 is enabled. That is, UE0 selects to transmit on the CP0, and not transmit on the CP1. The UE1 maintains one valid frequency offset value $FO_{UE1}^{cp1}$ on the CP1, and the absolute value is less than F hertz, then the UE1 does not enable the selective downlink data transmission function of the antenna groups. The UE2 is single antenna group activation and does not enable the selective downlink data transmission function of the antenna groups. The UE3 does not maintain the valid frequency offset value, however, the $SINR_{UE3}^{cp2}$ and $SINR_{UE3}^{cp3}$ are both less than the threshold value, and $SINR_{UE3}^{cp3} \prec SINR_{UE2}^{cp2}$ ($SINR_{UE2}^{cp2}$ is the SINR of the UE2 on the CP2), the UE3 is in to the midpoint position or the far point position, and then selects to transmit on the antenna group with a best signal channel condition, that is, the UE3 selects to transmit on the CP2, and not transmit on the CP3 .

In step 2, transmitting-end processing is performed on data based on a selected antenna group configured to transmit of each terminal. By using the selection situation for transmitting by each terminal transmitted on the current downlink subframe and determined by an uplink control mobile attenuation code (CMAC), and transmitting an identifier of the antenna group selected to not transmit by the each terminal to a downlink originating, the downlink physical layer performs the transmitting-end processing on data on the antenna group selected to not transmit by the each terminal according to the transmitted identifier.

This embodiment is an example in which the processing of clearing is performed for only uplink activation antenna group which is not selected. That is, the data is not transmitted in the resource block corresponding to the antenna group that is not selected by the each terminal, including the reference data. However, the data is normally transmitted on other antenna groups in the uplink activation set of the terminal without performing any processing. For example, the UE0 selects to transmit data on the CP0 and not to transmit on the CP1, clearing is performed on only the data in the resource block (including the reference data transmitted on this resource block) corresponding to the UE0 on the CP1. The selective downlink data transmission function is not activated for UE1, thus the UE1 normally transmits on all CPs. The UE2 is uplink single antenna group activation and does not activate the selective downlink data transmission function, that is, the data of the UE2 is transmitted on all antenna groups. The antenna group selected not to transmit by the UE3 is the CP3, then the UE3 performs the clearing on the data (including the reference data) in the resource block corresponding to UE3 on the CP3.

In step 3, the processed data on the each antenna group is converted into time-domain data, and transmitted through the air interface. In this embodiment, no frequency offset correction is performed on downlink transmitted data; but the present invention is not limited thereto. That is, the frequency offset correction may be performed on the transmitted data on the each antenna group, which may be terminal-level or antenna-group-level.

Embodiment two

As shown in FIG. 3, this embodiment provides a downlink data transmission apparatus, which includes a determining module 10 and a transmitting module 20.

The determining module 10 is configured to acquire status information on whether or not one or more antenna groups in an uplink activation set of a terminal perform downlink data transmission; and

The transmitting module 20 is configured to transmit, according to the status information, downlink data to the terminal on an antenna group, which needs to transmit the downlink data, in the uplink activation set.

Optionally, the determining module 10 includes a first acquiring unit, a determining unit and a second acquiring unit.

The first acquiring unit is configured to acquire measurement information obtained by monitoring status of each antenna group in the uplink activation set and the terminal;

The determining unit is configured to determine, according to the measurement information, whether or not to enable the selective downlink data transmission function of the antenna groups in the uplink activation set.

The second acquiring unit is configured to acquire the status information on whether or not each antenna group in the uplink activation set performs the data transmission when the selective downlink data transmission function of the antenna groups needs to be enabled.

Optionally, when the uplink activation set includes multiple antenna groups and the measurement information includes a frequency offset value of the each antenna group in the uplink activation set, the determining unit may be configured to:

enable the selective downlink data transmission function of the antenna groups if an absolute value of the frequency offset value of at least one antenna group in the uplink activation set is greater than or equal to a first preset threshold value; or

enable the selective downlink data transmission function of the antenna groups if an absolute value of a difference of frequency offset value between two antenna groups in the uplink activation set is greater than or equal to a second preset threshold value; or

enable the selective downlink data transmission function of the antenna groups if the absolute value of the frequency offset value of at least one antenna group in the uplink activation set is greater than or equal to a third preset threshold value as well as the absolute value of the frequency offset value of the antenna group is not equal to the frequency offset value of the antenna group.

Optionally, when the measurement information further includes the signal quality of each antenna group in the uplink activation set, the determining unit may be configured to:

enable the selective downlink data transmission function of the antenna groups if the absolute value of the frequency offset value of at least one antenna group in the uplink activation set is greater than or equal to the first preset threshold value and an absolute value of the difference of signal quality between two antenna groups in the uplink activation set is less than or equal to a fourth threshold value; or

enable the selective downlink data transmission function of the antenna groups if the absolute value of the difference of frequency offset value between two antenna groups in the uplink activation set is greater than or equal to the second preset threshold value and the absolute value of the difference of the signal quality between two antenna groups in the uplink activation set is less than or equal to the fourth threshold value; or

enable the selective downlink data transmission function of the antenna groups if the absolute value of the frequency offset value of at least one antenna group in the uplink activation set is greater than or equal to the third preset threshold value, the absolute value of the frequency offset value of the antenna group is not equal to the frequency offset value of the antenna group, and the absolute value of the difference of the signal quality between two antenna groups in the uplink activation set is less than or equal to the fourth threshold value.

Optionally, when the uplink activation set includes multiple antenna groups and the measurement information includes frequency offset values of a preset number of antenna groups in the uplink activation set, the determining unit may be configured to:
enable the selective downlink data transmission function of the antenna groups if the absolute value of the frequency offset value of at least one antenna group in the uplink activation set is greater than or equal to a fifth preset threshold value.

Optionally, if the uplink activation set includes the multiple antenna groups and the measurement information includes signal quality of the each antenna group in the uplink activation set, the determining unit may be configured to:
enable the selective downlink data transmission function of the antenna groups if the absolute value of the difference of the signal quality between two antenna groups in the uplink activation set is greater than or equal to a sixth threshold value.

Optionally, when the measurement information includes the status information of the terminal, the determining unit may be configured to:
enable the selective downlink data transmission function of the antenna groups when the status information of the terminal indicates that the terminal is not in a near point position.

Optionally, when the uplink activation set includes the multiple antenna groups, and the measurement information includes the SINR or the signal power of each antenna group in the uplink activation set, the determining unit may be configured to:
enable the selective downlink data transmission function of the antenna groups if the SINR or the signal power of each antenna group in the uplink activation set is less than or equal to a seven preset threshold value.

Optionally, when the uplink activation set includes the multiple antenna groups and the measurement information includes a path loss of each antenna group in the uplink activation set, the determining unit may be configured to:
enable the selective downlink data transmission function of the antenna groups if the path loss of each antenna group in the uplink activation set is greater than or equal to an eighth preset threshold value.

Optionally, the second acquiring unit may be configured to:

labeling the status information of a first antenna group in the uplink activation set as a status of transmitting data; or
labeling the status information of a second antenna group in the uplink activation set as a status of not transmitting data.

The transmitting module 20 may include a processing unit and a transmitting unit.

The processing unit is configured to perform, according to the status information of the antenna groups, transmitting-end processing on data on the antenna group, which does not need to transmit the downlink data, in the uplink activation set.

The transmitting unit is configured to transmit, after the transmitting-end processing, the downlink data to the terminal on the antenna group, which needs to transmit downlink data, in the uplink activation set.

Optionally, the processing unit may be further configured to:

when the status information of the antenna group is the status of not transmitting the downlink data, control not to transmit data in a resource block not of the antenna group; or
clear all data in the resource block of the antenna group; or
decrease a transmitting power of the data in the resource block of the antenna group.

Optionally, the transmitting unit may be configured to:
after the transmitting-end processing, transforming frequency-domain data on each antenna group in the uplink activation set into time-domain data, and transmit the time-domain data to the terminal through an air interface, so that the terminal receives downlink data on the antenna group transmitting the downlink data.

Optionally, the transmitting module 20 may further include a correction unit.

The correction unit is configured to perform a frequency offset correction on the frequency-domain data or the time-domain data.

It is to be noted that the apparatus in the apparatus embodiment one-to-one corresponds to the apparatus in the above method embodiment. Implementation modes in the method embodiment are applicable to the apparatus in the apparatus embodiment, which can achieve the same effect as the apparatus in the embodiment.

The present invention further provides a non-transient computer-readable storage medium, which is configured to store computer-executable instructions for executing the method in any embodiment described above.

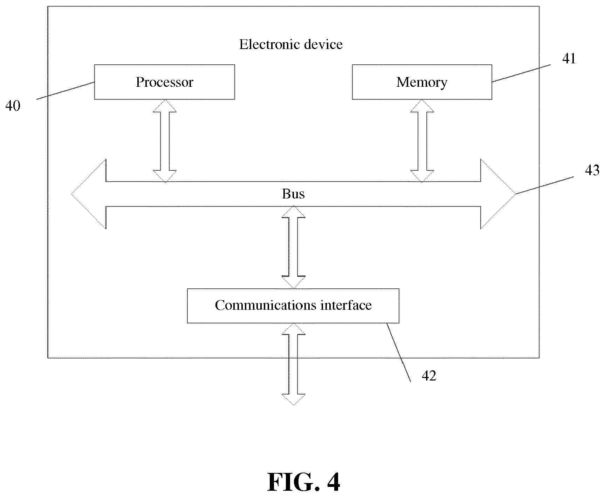

The present invention further provides a structural diagram of an electronic device. Referring to FIG. 4, the electronic device may be a base station, including at least one processor 40 and a memory 41.

In the example of FIG. 4, one processor 40 is illustrated. The base station may further include a communications interface 42 and a bus 43. The processor 40, the communications interface 42 and the memory 41 may communicate with each other through the bus 43. The communications interface 42 may be used for information transmission. The processor 40 may call logic instructions in the memory 41 to perform the above-mentioned method.

In addition, the logic instructions in the memory 41 may be implemented in the form of a software function unit and, when sold or used as an independent product, may be stored in a computer-readable storage medium.

As a computer-readable storage medium, the memory 41 may be used for storing software programs and computer-executable programs, such as program instructions or modules corresponding to the method in embodiments of the present invention. The processor 40 operates the software programs, instructions or modules stored in the memory 41 to execute function applications and data processing, that is, to implement the downlink data transmission method in the above method embodiments.

The memory 41 may include a program storage region and a data storage region. The program storage region may store an operating system and an application program required by at least one function; and the data storage region may store data created depending on use of a terminal device. In addition, the memory 41 may include a high-speed random access memory, and may further include a non-volatile memory.

The technical solutions of the present invention may be embodied in the form of a software product that is stored in a storage medium and includes one or more instructions for enabling a computer device (which may be a personal computer, server, network device, etc.) to execute all or part of the steps of the method provided by the embodiments of the present invention. The foregoing storage medium may be a non-transient storage medium, including a flash disk, mobile hard disk, read only memory (ROM), random access memory (RAM), magnetic disk, optical disk or another medium that can store program codes, or may be a transient storage medium.

It is to be noted that the present invention is applicable to an orthogonal frequency division multiplexing (OFDM) system.

**Claims**

1. A downlink data transmission method comprising:

   acquiring (100) status information on whether or not one or more antenna groups in an uplink activation set of a terminal perform downlink data transmission, wherein the uplink activation set of the terminal refers to a set of antenna groups with strong signals selected for the base station; transmitting (200), according to the status information on whether or not the one or more antenna groups in the uplink activation set of the terminal perform downlink data transmission, downlink data to the terminal on an antenna group configured to transmit the downlink data in the uplink activation set; wherein the acquiring the status information on whether or not the one or more antenna groups in the uplink activation set of the terminal perform the downlink data transmission comprises:

      acquiring measurement information obtained by monitoring status of each antenna group in the uplink activation set and the terminal; determining, according to the measurement information, whether or not to enable a selective downlink data transmission function of the antenna groups in the uplink activation set; and in response to determining to enable the selective downlink data transmission function of the antenna groups, acquiring the status information on whether or not the each antenna group in the uplink activation set performs data transmission; wherein in a case where the uplink activation set comprises a plurality of antenna groups, and the measurement information comprises a frequency offset value of the each antenna group in the uplink activation set, the determining, according to the measurement information, whether or not to enable the selective downlink data transmission function of the antenna groups in the uplink activation set comprises:

         in a case where an absolute value of the frequency offset value of at least one antenna group in the uplink activation set is greater than or equal to a first preset threshold value, enabling the selective downlink data transmission function of the antenna groups; or

in a case where an absolute value of a difference of the frequency offset value between two antenna groups in the uplink activation set is greater than or equal to a second preset threshold value, enabling the selective downlink data transmission function of the antenna groups; or

in a case where the absolute value of the frequency offset value of at least one antenna group in the uplink activation set is greater than or equal to a third preset threshold value as well as the absolute value of the frequency offset value of the at least one antenna group is not equal to the frequency offset value of the at least one antenna group, enabling the selective downlink data transmission function of the antenna groups.

2. The method according to claim 1, wherein when the measurement information further comprises signal quality of the each antenna group in the uplink activation set, the step of determining, according to the measurement information, whether or not to enable the selective downlink data transmission function of the antenna groups in the uplink activation set comprises:

when the absolute value of the frequency offset value of at least one antenna group in the uplink activation set is greater than or equal to the first preset threshold value and an absolute value of a difference of signal quality between two antenna groups in the uplink activation set is less than or equal to a fourth threshold value, enabling the selective downlink data transmission function of the antenna groups; or

when the absolute value of the difference of the frequency offset value between two antenna groups in the uplink activation set is greater than or equal to the second preset threshold value and the absolute value of the difference of the signal quality between two antenna groups in the uplink activation set is less than or equal to the fourth threshold value, enabling the selective downlink data transmission function of the antenna groups; or

when the absolute value of the frequency offset value of the at least one antenna group in the uplink activation set is greater than or equal to the third preset threshold value, the absolute value of the frequency offset value of the at least one antenna group is not equal to the frequency offset value of the at least one antenna group, and the absolute value of the difference of the signal quality between two antenna groups in the uplink activation set is less than or equal to the fourth threshold value, enabling the selective downlink data transmission function of the antenna groups.

3. The method according to claim 1, wherein when the uplink activation set comprises a plurality of antenna groups, and the measurement information comprises frequency offset values of a preset number of antenna groups in the uplink activation set, the step of determining, according to the measurement information, whether or not to enable the selective downlink data transmission function of the antenna groups in the uplink activation set comprises:
when an absolute value of a frequency offset value of at least one antenna group in the uplink activation set is greater than or equal to a fifth preset threshold value, enabling the selective downlink data transmission function of the antenna groups.

4. The method according to claim 1, wherein when the uplink activation set comprises a plurality of antenna groups, and the measurement information comprises signal quality of the each antenna group in the uplink activation set, the step of determining, according to the measurement information, whether or not to enable the selective downlink data transmission function of the antenna groups in the uplink activation set comprises:
when an absolute value of a difference of the signal quality between two antenna groups in the uplink activation set is greater than or equal to a sixth threshold value, enabling the selective downlink data transmission function of the antenna groups.

5. The method according to claim 1, wherein when the measurement information comprises the status information of the terminal, the step of determining, according to the measurement information, whether or not to enable the selective downlink data transmission function of the antenna groups in the uplink activation set comprises:
when the status information of the terminal indicates that the terminal is not in a near point position, enabling the selective downlink data transmission function of the antenna groups.

6. The method according to claim 1, wherein when the uplink activation set comprises a plurality of antenna groups, and the measurement information comprises a signal to interference plus noise ratio or a signal power of the each antenna group in the uplink activation set, the step of determining, according to the measurement information, whether or not to enable the selective downlink data transmission function of the antenna groups in the uplink activation set comprises:

when the signal to interference plus noise ratio or the signal power of the each antenna group in the uplink activation set is less than or equal to a seven preset threshold value, enabling the selective downlink data transmission function of the antenna groups.

7. The method according to claim 1, wherein when the uplink activation set comprises a plurality of antenna groups, and the measurement information comprises a path loss of the each antenna group in the uplink activation set, the step of determining, according to the measurement information, whether or not to enable the selective downlink data transmission function of the antenna groups in the uplink activation set comprises:
when the path loss of the each antenna group in the uplink activation set is greater than or equal to an eighth preset threshold value, enabling the selective downlink data transmission function of the antenna groups.

8. The method according to any one of claims 1 to 7, wherein the step of, when determining to enable the selective downlink data transmission function of the antenna groups, acquiring the status information on whether or not the each antenna group in the uplink activation set performs data transmission comprises:

labeling the status information of a first antenna group in the uplink activation set as a status of transmitting data; or
labeling the status information of a second antenna group in the uplink activation set as a status of not transmitting data.

9. The method according to claim 1, wherein the step of transmitting, according to the status information, downlink data to the terminal on the antenna group configured to transmit the downlink data in the uplink activation set comprises:

performing, according to the status information of the antenna groups, transmitting-end processing on data on an antenna group not to transmit the downlink data in the uplink activation set; and
transmitting the downlink data to the terminal on the antenna group configured to transmit downlink data in the uplink activation set after performing the transmitting-end processing.

10. The method according to claim 9, wherein the step of performing, according to the status information of the antenna groups, transmitting-end processing on data on an antenna group not to transmit the downlink data in the uplink activation set comprises:

when the status information of an antenna group is the status of not transmitting the downlink data, controlling not to transmit data in a resource block of the antenna group; or
clearing all data in the resource block of the antenna group; or
decreasing a transmitting power of the data in the resource block of the antenna group.

11. The method according to claim 9, wherein the step of transmitting the downlink data to the terminal on the antenna group configured to transmit downlink data in the uplink activation set after performing the transmitting-end processing comprises:

after performing the transmitting-end processing, transforming frequency-domain data on each antenna group in the uplink activation set into time-domain data, and transmitting the time-domain data to the terminal through an air interface; the downlink data is received by the terminal on the antenna group transmitting the downlink data,
preferably, wherein the step of transmitting the downlink data to the terminal on the antenna group configured to transmit downlink data in the uplink activation set after performing the transmitting-end processing comprises:
performing a frequency offset correction on the frequency-domain data or the time-domain data.

12. A downlink data transmission apparatus comprising

a determining module (10), which is configured to acquire status information on whether or not one or more antenna groups in the uplink activation set of a terminal perform downlink data transmission, wherein the uplink activation set of the terminal refers to a set of antenna groups with strong signals selected for the base station;
a transmitting module (20), which is configured to transmit, according to the status information on whether or not the one or more antenna groups in the uplink activation set of the terminal performs the downlink data transmission, downlink data to the terminal on an antenna group configured to transmit the downlink data in the uplink activation set;
the determining module (10) comprises a first acquiring unit, a determining unit and a second acquiring unit; wherein the first acquiring unit is configured to acquire measurement information obtained by monitoring status of each antenna group in the uplink activation set and the terminal; the determining unit is configured to determine, according to the measurement information, whether or not to enable a selective downlink data transmission function of the antenna groups in the uplink activation set; and the second acquiring unit is configured to: in response to determining to enable the selective downlink data transmission function of the antenna groups, acquire the status information on whether or not the each antenna group in the uplink activation set performs data transmission;

wherein in a case where the uplink activation set comprises a plurality of antenna groups, and the measurement information comprises a frequency offset value of the each antenna group in the uplink activation set, the determining unit is configured to:

in a case where an absolute value of the frequency offset value of at least one antenna group in the uplink activation set is greater than or equal to a first preset threshold value, enable the selective downlink data transmission function of the antenna groups; or

in a case where an absolute value of a difference of the frequency offset value between two antenna groups in the uplink activation set is greater than or equal to a second preset threshold value, enable the selective downlink data transmission function of the antenna groups; or

in a case where the absolute value of the frequency offset value of at least one antenna group in the uplink activation set is greater than or equal to a third preset threshold value as well as the absolute value of the frequency offset value of the at least one antenna group is not equal to the frequency offset value of the at least one antenna group, enable the selective downlink data transmission function of the antenna groups.

**Patentansprüche**

1. Verfahren zur Übertragung von Downlink-Daten, umfassend ein Erlangen (100) von Statusinformationen dahingehend, ob eine oder mehrere Antennengruppen in einem Uplink-Aktivierungssatz eines Endgeräts Übertragung von Downlink-Daten durchführen oder nicht, wobei sich der Uplink-Aktivierungssatz des Endgeräts auf einen Satz von Antennengruppen mit starken Signalen, die für die Basisstation ausgewählt sind, bezieht;

ein Übertragen (200), gemäß den Statusinformationen dahingehend, ob die eine oder die mehreren Antennengruppen in dem Uplink-Aktivierungssatz des Endgeräts Übertragung von Downlink-Daten durchführen oder nicht, von Downlink-Daten an das Endgerät an einer Antennengruppe, die dazu konfiguriert ist, die Downlink-Daten in dem Uplink-Aktivierungssatz zu übertragen;

wobei das Erlangen der Statusinformationen dahingehend, ob die eine oder die mehreren Antennengruppen in dem Uplink-Aktivierungssatz des Endgeräts die Übertragung von Downlink-Daten durchführen oder nicht, Folgendes umfasst:

ein Erlangen von Messinformationen, die durch ein Überwachen eines Status jeder Antennengruppe in dem Uplink-Aktivierungssatz und dem Endgerät erhalten werden;

ein Bestimmen, gemäß den Messinformationen, ob eine selektive Downlink-Datenübertragungsfunktion der Antennengruppen in dem Uplink-Aktivierungssatz ermöglicht werden soll oder nicht; und

als Reaktion auf das Bestimmen, die selektive Downlink-Datenübertragungsfunktion der Antennengruppen zu ermöglichen,

Erlangen der Statusinformationen dahingehend, ob jede Antennengruppe in dem Uplink-Aktivierungssatz Datenübertragungen durchführt oder nicht;

wobei in einem Fall, in dem der Uplink-Aktivierungssatz eine Vielzahl von Antennengruppen umfasst und die Messinformationen einen Frequenzversatzwert jeder Antennengruppe in dem Uplink-Aktivierungssatz umfassen, das Bestimmen, gemäß den Messinformationen, ob die selektive Downlink-Datenübertragungsfunktion der Antennengruppen in dem Uplink-Aktivierungssatz ermöglicht werden soll oder nicht, Folgendes umfasst:

in einem Fall, in dem ein Absolutwert des Frequenzversatzwertes zumindest einer Antennengruppe in dem Uplink-Aktivierungssatz größer als oder gleich einem ersten voreingestellten Schwellenwert ist, ein Ermöglichen der selektiven Downlink-Datenübertragungsfunktion der Antennengruppen; oder

in einem Fall, in dem ein Absolutwert einer Differenz des Frequenzversatzwertes zwischen zwei Antennengruppen in dem Uplink-Aktivierungssatz größer als oder gleich einem zweiten voreingestellten Schwellenwert ist, ein Ermöglichen der selektiven Downlink-Datenübertragungsfunktion der Antennengruppen; oder

in einem Fall, in dem der Absolutwert des Frequenzversatzwertes zumindest einer Antennengruppe in dem Uplink-Aktivierungssatz größer als oder gleich einem dritten voreingestellten Schwellenwert ist und der Absolutwert des Frequenzversatzwertes der zumindest einen Antennengruppe nicht gleich dem Frequenzversatzwert der zumindest einen Antennengruppe ist, ein Ermöglichen der selektiven Downlink-Datenübertragungsfunktion der Antennengruppen.

2.  Verfahren nach Anspruch 1, wobei, wenn die Messinformationen ferner eine Signalqualität jeder Antennengruppe in dem Uplink-Aktivierungssatz umfassen, der Schritt des Bestimmens, gemäß den Messinformationen, ob die selektive Downlink-Datenübertragungsfunktion der Antennengruppen in dem Uplink-Aktivierungssatz ermöglicht werden soll oder nicht, Folgendes umfasst:

wenn der Absolutwert des Frequenzversatzwertes zumindest einer Antennengruppe in dem Uplink-Aktivierungssatz größer als oder gleich dem ersten voreingestellten Schwellenwert ist und ein Absolutwert einer Differenz der Signalqualität zwischen zwei Antennengruppen in dem Uplink-Aktivierungssatz kleiner als oder gleich einem vierten Schwellenwert ist, ein Ermöglichen der selektiven Downlink-Datenübertragungsfunktion der Antennengruppen; oder wenn der Absolutwert der Differenz des Frequenzversatzwertes zwischen zwei Antennengruppen in dem Uplink-Aktivierungssatz größer als oder gleich dem zweiten voreingestellten Schwellenwert ist und der Absolutwert der Differenz der Signalqualität zwischen zwei Antennengruppen in dem Uplink-Aktivierungssatz kleiner als oder gleich dem vierten Schwellenwert ist, ein Ermöglichen der selektiven Downlink-Datenübertragungsfunktion der Antennengruppen; oder wenn der Absolutwert des Frequenzversatzwertes der zumindest einen Antennengruppe in dem Uplink-Aktivierungssatz größer als oder gleich dem dritten voreingestellten Schwellenwert ist, der Absolutwert des Frequenzversatzwertes der zumindest einen Antennengruppe nicht gleich dem Frequenzversatzwert der zumindest einen Antennengruppe ist und der Absolutwert der Differenz der Signalqualität zwischen zwei Antennengruppen in dem Uplink-Aktivierungssatz kleiner als oder gleich dem vierten Schwellenwert ist, ein Ermöglichen der selektiven Downlink-Datenübertragungsfunktion der Antennengruppen.

3.  Verfahren nach Anspruch 1, wobei, wenn der Uplink-Aktivierungssatz eine Vielzahl von Antennengruppen umfasst und die Messinformationen einen Frequenzversatzwert einer voreingestellten Anzahl von Antennengruppen in dem Uplink-Aktivierungssatz umfassen, der Schritt des Bestimmens, gemäß den Messinformationen, ob die selektive Downlink-Datenübertragungsfunktion der Antennengruppen in dem Uplink-Aktivierungssatz ermöglicht werden soll oder nicht, Folgendes umfasst:

wenn ein Absolutwert eines Frequenzversatzwertes zumindest einer Antennengruppe in dem Uplink-Aktivierungssatz größer als oder gleich einem fünften voreingestellten Schwellenwert ist, ein Ermöglichen der selektiven Downlink-Datenübertragungsfunktion der Antennengruppen.

4.  Verfahren nach Anspruch 1, wobei, wenn der Uplink-Aktivierungssatz eine Vielzahl von Antennengruppen umfasst und die Messinformationen die Signalqualität jeder Antennengruppe in dem Uplink-Aktivierungssatz umfassen, der Schritt des Bestimmens, gemäß den Messinformationen, ob die selektive Downlink-Datenübertragungsfunktion der Antennengruppen in dem Uplink-Aktivierungssatz ermöglicht werden soll oder nicht, Folgendes umfasst: wenn ein Absolutwert einer Differenz der Signalqualität zwischen zwei Antennengruppen in dem Uplink-Aktivierungssatz größer als oder gleich einem sechsten Schwellenwert ist, ein Ermöglichen der selektiven Downlink-Datenübertragungsfunktion der Antennengruppen.

5.  Verfahren nach Anspruch 1, wobei, wenn die Messinformationen die Statusinformationen des Endgeräts umfassen, der Schritt des Bestimmens, gemäß den Messinformationen, ob die selektive Downlink-Datenübertragungsfunktion der Antennengruppen in dem Uplink-Aktivierungssatz ermöglicht werden soll oder nicht, Folgendes umfasst: wenn die Statusinformationen des Endgeräts angeben, dass sich das Endgerät nicht in einer Nahpunktposition befindet, ein Ermöglichen der selektiven Downlink-Datenübertragungsfunktion der Antennengruppen.

6.  Verfahren nach Anspruch 1, wobei, wenn der Uplink-Aktivierungssatz eine Vielzahl von Antennengruppen umfasst und die Messinformationen ein Signal-Interferenz-plus-Rauschen-Verhältnis oder eine Signalstärke jeder Antennengruppe in dem Uplink-Aktivierungssatz umfassen, der Schritt des Bestimmens, gemäß den Messinformationen, ob die selektive Downlink-Datenübertragungsfunktion der Antennengruppen in dem Uplink-Aktivierungssatz ermöglicht werden soll oder nicht, Folgendes umfasst: wenn das Signal-Interferenz-plus-Rauschen-Verhältnis oder die Signalstärke jeder Antennengruppe in dem Uplink-Aktivierungssatz kleiner als oder gleich einem siebenten voreingestellten Schwellenwert ist, ein Ermöglichen der selektiven Downlink-Datenübertragungsfunktion der Antennengruppen.

**7.** Verfahren nach Anspruch 1, wobei, wenn der Uplink-Aktivierungssatz eine Vielzahl von Antennengruppen umfasst und die Messinformationen einen Pfadverlust jeder Antennengruppe in dem Uplink-Aktivierungssatz umfassen, der Schritt des Bestimmens, gemäß den Messinformationen, ob die selektive Downlink-Datenübertragungsfunktion der Antennengruppen in dem Uplink-Aktivierungssatz ermöglicht werden soll oder nicht, Folgendes umfasst: wenn der Pfadverlust jeder Antennengruppe in dem Uplink-Aktivierungssatz größer als oder gleich einem achten voreingestellten Schwellenwert ist, ein Ermöglichen der selektiven Downlink-Datenübertragungsfunktion der Antennengruppen.

**8.** Verfahren nach einem der Ansprüche 1 bis 7, wobei beim Bestimmen, die selektive Downlink-Datenübertragungsfunktion der Antennengruppen zu ermöglichen, der Schritt des Erlangens der Statusinformationen dahingehend, ob jede Antennengruppe in dem Uplink-Aktivierungssatz Datenübertragungen durchführt oder nicht, Folgendes umfasst:

ein Markieren der Statusinformationen einer ersten Antennengruppe in dem Uplink-Aktivierungssatz als einen Status des Übertragens von Daten; oder
ein Markieren der Statusinformationen einer zweiten Antennengruppe in dem Uplink-Aktivierungssatz als einen Status des Nichtübertragens von Daten.

**9.** Verfahren nach Anspruch 1, wobei der Schritt des Übertragens, gemäß den Statusinformationen, von Downlink-Daten an das Endgerät an der Antennengruppe, die dazu konfiguriert ist, die Downlink-Daten in dem Uplink-Aktivierungssatz zu übertragen, Folgendes umfasst:

ein Durchführen, gemäß den Statusinformationen der Antennengruppen, von Verarbeitung von Daten am Übertragungsende an einer Antennengruppe, die die Downlink-Daten in dem Uplink-Aktivierungssatz nicht übertragen soll; und
ein Übertragen der Downlink-Daten an das Endgerät an der Antennengruppe, die dazu konfiguriert ist, die Downlink-Daten in dem Uplink-Aktivierungssatz zu übertragen, nach dem Durchführen der Verarbeitung am Übertragungsende.

**10.** Verfahren nach Anspruch 9, wobei der Schritt des Durchführens, gemäß den Statusinformationen der Antennengruppen, von Verarbeitung von Daten am Übertragungsende an einer Antennengruppe, die die Downlink-Daten in dem Uplink-Aktivierungssatz nicht übertragen soll, Folgendes umfasst:

wenn die Statusinformationen einer Antennengruppe der Status des Nichtübertragens der Downlink-Daten sind, ein Steuern davon, Daten in einem Ressourcenblock der Antennengruppe nicht zu übertragen; oder
ein Löschen aller Daten in dem Ressourcenblock der Antennengruppe; oder
ein Verringern einer Übertragungsstärke der Daten in dem Ressourcenblock der Antennengruppe.

**11.** Verfahren nach Anspruch 9, wobei der Schritt des Übertragens der Downlink-Daten an das Endgerät an der Antennengruppe, die dazu konfiguriert ist, die Downlink-Daten in dem Uplink-Aktivierungssatz zu übertragen, nach dem Durchführen der Verarbeitung am Übertragungsende, Folgendes umfasst:

nach dem Durchführen der Verarbeitung am Übertragungsende, ein Umwandeln von Frequenzdomänendaten an jeder Antennengruppe in dem Uplink-Aktivierungssatz in Zeitdomänendaten, und ein Übertragen der Zeitdomänendaten über eine Luftschnittstelle an das Endgerät; wobei die Downlink-Daten durch das Endgerät an der Antennengruppe, die die Downlink-Daten überträgt, empfangen werden,
wobei bevorzugt der Schritt des Übertragens der Downlink-Daten an das Endgerät an der Antennengruppe, die dazu konfiguriert ist, die Downlink-Daten in dem Uplink-Aktivierungssatz zu übertragen, nach dem Durchführen der Verarbeitung am Übertragungsende, Folgendes umfasst:
ein Durchführen einer Frequenzversatzkorrektur an dem Frequenzdomänendaten oder den Zeitdomänendaten.

**12.** Vorrichtung zur Übertragung von Downlink-Daten, umfassend:

ein Bestimmungsmodul (10), das dazu konfiguriert ist, Statusinformationen dahingehend zu erlangen, ob eine oder mehrere Antennengruppen in dem Uplink-Aktivierungssatz eines Endgeräts Übertragung von Downlink-Daten durchführen oder nicht, wobei sich der Uplink-Aktivierungssatz des Endgeräts auf einen Satz von Antennengruppen mit starken Signalen, die für die Basisstation ausgewählt sind, bezieht;
ein Übertragungsmodul (20), das dazu konfiguriert ist, gemäß den Statusinformationen dahingehend, ob die eine oder die mehreren Antennengruppen in dem Uplink-Aktivierungssatz des Endgeräts die Übertragung von Downlink-Daten durchführen oder nicht, Downlink-Daten an das Endgerät an einer Antennengruppe zu übertragen, die dazu konfiguriert ist, die Downlink-Daten in dem Uplink-Aktivierungssatz zu übertragen;

wobei das Bestimmungsmodul (10) eine erste Erlangungseinheit, eine Bestimmungseinheit und eine zweite Erlangungseinheit umfasst; wobei die erste Erlangungseinheit dazu konfiguriert ist, Messinformationen, die durch ein Überwachen eines Status jeder Antennengruppe in dem Uplink-Aktivierungssatz und dem Endgerät erhalten werden, zu erlangen; die Bestimmungseinheit dazu konfiguriert ist, gemäß den Messinformationen zu bestimmen, ob eine selektive Downlink-Datenübertragungsfunktion der Antennengruppen in dem Uplink-Aktivierungssatz ermöglicht werden soll oder nicht; und die zweite Erlangungseinheit zu Folgendem konfiguriert ist: als Reaktion auf das Bestimmen, die selektive Downlink-Datenübertragungsfunktion der Antennengruppen zu ermöglichen, die Statusinformationen dahingehend zu erlangen, ob jede Antennengruppe in dem Uplink-Aktivierungssatz Datenübertragungen durchführt oder nicht;

wobei in einem Fall, in dem der Uplink-Aktivierungssatz eine Vielzahl von Antennengruppen umfasst und die Messinformationen einen Frequenzversatzwert jeder Antennengruppe in dem Uplink-Aktivierungssatz umfassen, die Bestimmungseinheit zu Folgendem konfiguriert ist:

in einem Fall, in dem ein Absolutwert des Frequenzversatzwertes zumindest einer Antennengruppe in dem Uplink-Aktivierungssatz größer als oder gleich einem ersten voreingestellten Schwellenwert ist, die selektive Downlink-Datenübertragungsfunktion der Antennengruppen zu ermöglichen;

oder

in einem Fall, in dem ein Absolutwert einer Differenz des Frequenzversatzwertes zwischen zwei Antennengruppen in dem Uplink-Aktivierungssatz größer als oder gleich einem zweiten voreingestellten Schwellenwert ist, die selektive Downlink-Datenübertragungsfunktion der Antennengruppen zu ermöglichen;

oder

in einem Fall, in dem der Absolutwert des Frequenzversatzwertes zumindest einer Antennengruppe in dem Uplink-Aktivierungssatz größer als oder gleich einem dritten voreingestellten Schwellenwert ist und der Absolutwert des Frequenzversatzwertes der zumindest einen Antennengruppe nicht gleich dem Frequenzversatzwert der zumindest einen Antennengruppe ist, die selektive Downlink-Datenübertragungsfunktion der Antennengruppen zu ermöglichen.

## Revendications

1. Procédé de transmission de données de liaison descendante comprenant :

l'acquisition (100) d'informations de statut quant au fait qu'un ou plusieurs groupes d'antennes dans un ensemble d'activation de liaison montante d'un terminal réalisent ou non une transmission de données de liaison descendante, dans lequel l'ensemble d'activation de liaison montante du terminal fait référence à un ensemble de groupes d'antennes avec des signaux forts sélectionnées pour la station de base ;

la transmission (200), selon les informations de statut quant au fait que les un ou plusieurs groupes d'antennes dans l'ensemble d'activation de liaison montante du terminal réalisent ou non une transmission de données de liaison descendante, des données de liaison descendante du terminal sur un groupe d'antennes configurées pour transmettre les données de liaison descendante dans l'ensemble d'activation de liaison montante ;

dans lequel l'acquisition des informations de statut quant au fait que les un ou plusieurs groupes d'antennes dans l'ensemble d'activation de liaison montante du terminal réalisent ou non la transmission de données de liaison descendante comprend :

l'acquisition d'informations de mesure obtenues par un statut de surveillance de chaque groupe d'antennes dans l'ensemble d'activation de liaison montante et le terminal ;

la détermination, selon les informations de mesure, du fait de permettre ou non une fonction de transmission de données de liaison descendante sélective des groupes d'antennes dans l'ensemble d'activation de liaison montante ; et

en réponse à la détermination pour activer la fonction de transmission de données de liaison descendante sélective du groupe d'antennes, l'acquisition des informations de statut quant au fait que chaque groupe d'antennes dans l'ensemble d'activation de liaison montante réalise ou non une transmission de données ;

dans lequel dans un cas où l'ensemble d'activation de liaison montante comprend une pluralité de groupes d'antennes, et les informations de mesure comprennent une valeur de décalage de fréquence de chaque groupe d'antennes dans l'ensemble d'activation de liaison montante, la détermination, selon les informations de mesure, du fait d'activer ou non la fonction de transmission de données de liaison descendante sélective des groupes d'antennes dans l'ensemble d'activation de liaison montante comprend :

dans un cas où une valeur absolue de la valeur de décalage de fréquence d'au moins un groupe d'antennes dans l'ensemble d'activation de liaison montante est supérieure ou égale à une première valeur de seuil prédéfinie, l'activation de la fonction de transmission de données de liaison descendante sélective des groupes d'antennes ; ou

dans un cas où une valeur absolue d'une différence de la valeur de décalage de fréquence entre deux groupes d'antennes dans l'ensemble d'activation de liaison montante est supérieure ou égale à une deuxième valeur de seuil prédéfinie, l'activation de la fonction de transmission de données de liaison descendante sélective du groupe d'antennes ; ou

dans un cas où la valeur absolue de la valeur de décalage de fréquence d'au moins un groupe d'antennes dans l'ensemble d'activation de liaison montante est supérieure ou égale à une troisième valeur de seuil prédéfinie ainsi que la valeur absolue de la valeur de décalage de fréquence de l'au moins un groupe d'antennes n'est pas égale à la valeur de décalage de fréquence de l'au moins un groupe d'antennes, l'activation de la fonction de transmission de données de liaison descendante sélective des groupes d'antennes.

2. Procédé selon la revendication 1, dans lequel lorsque les informations de mesure comprennent en outre une qualité de signal de chaque groupe d'antennes dans l'ensemble d'activation de liaison montante, l'étape de détermination, selon les informations de mesure, du fait d'activer ou non la fonction de transmission de données de liaison descendante sélective du groupe d'antennes dans l'ensemble d'activation de liaison montante comprend :

lorsque la valeur absolue de la valeur de décalage de fréquence d'au moins un groupe d'antennes dans l'ensemble d'activation de liaison montante est supérieure ou égale à la première valeur de seuil prédéfinie et une valeur absolue d'une différence de qualité de signal entre deux groupes d'antennes dans l'ensemble d'activation de liaison montante est inférieure ou égale à une quatrième valeur de seuil, l'activation de la fonction de transmission de données de liaison descendante sélective du groupe d'antennes ; ou

lorsque la valeur absolue de la différence de la valeur de décalage de fréquence entre deux groupes d'antennes dans l'ensemble d'activation de liaison montante est supérieure ou égale à la deuxième valeur de seuil prédéfinie et la valeur absolue de la différence de la qualité de signal entre deux groupes d'antennes dans l'ensemble d'activation de liaison montante est inférieure ou égale à la quatrième valeur de seuil, l'activation de la fonction de transmission de données de liaison descendante sélective des groupes d'antennes ; ou

lorsque la valeur absolue de la valeur de décalage de fréquence de l'au moins un groupe d'antennes dans l'ensemble d'activation de liaison montante est supérieure ou égale à la troisième valeur de seuil prédéfinie, la valeur absolue de la valeur de décalage de fréquence de l'au moins un groupe d'antennes n'est pas égale à la valeur de décalage de fréquence de l'au moins un groupe d'antennes, et la valeur absolue de la différence de la qualité de signal entre deux groupes d'antennes dans l'ensemble d'activation de liaison montante est inférieure ou égale à la quatrième valeur de seuil, activant la fonction de transmission de données de liaison descendante sélective du groupe d'antennes.

3. Procédé selon la revendication 1, dans lequel lorsque l'ensemble d'activation de liaison montante comprend une pluralité de groupes d'antennes, et les informations de mesure comprennent des valeurs de décalage de fréquence d'un nombre prédéfini de groupes d'antennes dans l'ensemble d'activation de liaison montante, l'étape de détermination, selon les informations de mesure, du fait d'activer ou non la fonction de transmission de données de liaison descendante sélective des groupes d'antennes dans l'ensemble d'activation de liaison montante comprend :
lorsqu'une valeur absolue d'une valeur de décalage de fréquence d'au moins un groupe d'antennes dans l'ensemble d'activation de liaison montante est supérieure ou égale à une cinquième valeur de seuil prédéfinie, l'activation de la fonction de transmission de données de liaison descendante sélective des groupes d'antennes.

4. Procédé selon la revendication 1, dans lequel lorsque l'ensemble d'activation de liaison montante comprend une pluralité de groupes d'antennes, et les informations de mesure comprennent une qualité de signal de chaque groupe d'antennes dans l'ensemble d'activation de liaison montante, l'étape de détermination, selon les informations de mesure, du fait d'activer ou non la fonction de transmission de données de liaison descendante sélective des groupe d'antennes dans l'ensemble d'activation de liaison montante comprend :

lorsqu'une valeur absolue d'une différence de la qualité de signal entre deux groupes d'antennes dans l'ensemble d'activation de liaison montante est supérieure ou égale à une sixième valeur de seuil, l'activation de la fonction de transmission de données de liaison descendante sélective du groupe d'antennes.

**5.** Procédé selon la revendication 1, dans lequel les informations de mesure comprennent les informations de statut du terminal, l'étape de détermination, selon les informations de mesure, du fait d'activer ou non la fonction de transmission de données de liaison descendante sélective des groupes d'antennes dans l'ensemble d'activation de liaison montante comprend :

lorsque les informations de statut du terminal indiquent que le terminal n'est pas dans une position de point voisin, l'activation de la fonction de transmission de données de liaison descendante sélective du groupe d'antennes.

**6.** Procédé selon la revendication 1, dans lequel lorsque l'ensemble d'activation de liaison montante comprend une pluralité de groupes d'antennes, et les informations de mesure comprennent un rapport signal sur interférence plus bruit ou une puissance de signal de chaque groupe d'antennes dans l'ensemble d'activation de liaison montante, l'étape de détermination, selon les informations de mesure, du fait d'activer ou non la fonction de transmission de données de liaison descendante sélective des groupes d'antennes dans l'ensemble d'activation de liaison montante comprend :

lorsque le rapport signal sur interférence plus bruit ou la puissance de signal de chaque groupe d'antennes dans l'ensemble d'activation de liaison montante est inférieur ou égal à une septième valeur de seuil prédéfinie, l'activation de la fonction de transmission de données de liaison descendante sélective des groupes d'antennes.

**7.** Procédé selon la revendication 1, dans lequel lorsque l'ensemble d'activation de liaison montante comprend une pluralité de groupes d'antennes, et les informations de mesure comprennent une perte de chemin de chaque groupe d'antennes dans l'ensemble d'activation de liaison montante, l'étape de détermination, selon le informations de mesure, du fait d'activer ou non la fonction de transmission de données de liaison descendante sélective des groupes d'antennes dans l'ensemble d'activation de liaison montante comprend :

lorsque la perte de chemin de chaque groupe d'antennes dans l'ensemble d'activation de liaison montante est supérieure ou égale à une huitième valeur de seuil prédéfinie, l'activation de la fonction de transmission de données de liaison descendante sélective des groupes d'antennes.

**8.** Procédé selon l'une quelconque des revendications 1 à 7, dans lequel l'étape, lors de la détermination d'activation de la fonction de transmission de données de liaison descendante sélective des groupes d'antennes, d'acquisition des informations de statut quant au fait que chaque groupe d'antennes dans l'ensemble d'activation de liaison montante réalise ou non une transmission de données comprend :

l'étiquetage des informations de statut d'un premier groupe d'antennes dans l'ensemble d'activation de liaison montante en tant que statut de transmission de données ; ou
l'étiquetage des informations de statut d'un second groupe d'antennes dans l'ensemble d'activation de liaison montante en tant que statut de non-transmission de données.

**9.** Procédé selon la revendication 1, dans lequel l'étape de transmission, selon les informations de statut, de données de liaison descendante au terminal sur le groupe d'antennes configuré pour transmettre les données de liaison descendante dans l'ensemble d'activation de liaison montante comprend :

la réalisation, selon les informations de statut des groupes d'antennes, d'un traitement en fin de transmission sur des données sur un groupe d'antennes pour ne pas transmettre les données de liaison descendante dans l'ensemble d'activation de liaison montante ; et
la transmission des données de liaison descendantes au terminal sur le groupe d'antennes configuré pour transmettre des données de liaison descendante dans l'ensemble d'activation de liaison montante après avoir réalisé le traitement en fin de transmission.

**10.** Procédé selon la revendication 9, dans lequel l'étape de réalisation, selon les informations de statut des groupes d'antennes, d'un traitement en fin de transmission sur des données sur un groupe d'antennes pour ne pas transmettre les données de liaison descendante dans l'ensemble d'activation de liaison montante comprend :

lorsque les informations de statut d'un groupe d'antennes sont le statut de non-transmission des données de liaison descendante, un contrôle pour ne pas transmettre de données dans un bloc de ressources du groupe d'antennes ; ou

la suppression de toutes les données dans le bloc de ressources du groupe d'antennes ; ou la diminution d'une puissance de transmission des données dans le bloc de ressources du groupe d'antennes.

11. Procédé selon la revendication 9, dans lequel l'étape de transmission des données de liaison descendante au terminal sur le groupe d'antennes configuré pour transmettre des données de liaison descendante dans l'ensemble d'activation de liaison montante après avoir réalisé le traitement en fin de transmission comprend :

après avoir réalisé le traitement en fin de transmission, la transformation de données de domaine de fréquences sur chaque groupe d'antennes dans l'ensemble d'activation de liaison montante en données de domaine temporel, et la transmission des données de domaine temporel au terminal par le biais d'une interface radio ; les données de liaison descendante sont reçues par le terminal de chaque groupe d'antennes transmettant les données de liaison descendante,

de préférence, dans lequel l'étape de transmission des données de liaison descendante au terminal sur le groupe d'antennes configuré pour transmettre des données de liaison descendante dans l'ensemble d'activation de liaison montante après avoir réalisé le traitement en fin de transmission comprend :
la réalisation d'une correction de décalage de fréquence sur les données de domaine de fréquences ou les données de domaine temporel.

12. Appareil de transmission de données de liaison descendante comprenant :

un module de détermination (10), qui est configuré pour acquérir des informations de statut quant au fait qu'un ou plusieurs groupes d'antennes dans l'ensemble d'activation de liaison montante d'un terminal réalisent ou non une transmission de données de liaison descendante, dans lequel l'ensemble d'activation de liaison montante du terminal fait référence à un ensemble de groupes d'antennes avec des signaux forts sélectionnés pour la station de base ;
un module de transmission (20), qui est configuré pour transmettre, selon les informations de statut le fait que les un ou plusieurs groupes d'antennes dans l'ensemble d'activation de liaison montante du terminal réalisent ou non la transmission de données de liaison descendante, des données de liaison descendante au terminal sur un groupe d'antennes configuré pour transmettre les données de liaison descendante dans l'ensemble d'activation de liaison montante ;
le module de détermination (10) comprend une première unité d'acquisition, une unité de détermination et une seconde unité d'acquisition ;
dans lequel la première unité d'acquisition est configurée pour acquérir des informations de mesure obtenues en surveillant un statut de chaque groupe d'antennes dans l'ensemble d'activation de liaison montante et le terminal ;
l'unité de détermination est configurée pour déterminer, selon les informations de mesure, le fait d'activer ou non une fonction de transmission de données de liaison descendante sélective des groupes d'antennes dans l'ensemble d'activation de liaison montante ; et la seconde unité d'acquisition est configurée pour : en réponse à la détermination d'activation de la fonction de transmission de données de liaison descendante sélective des groupes d'antennes, acquérir les informations de statut quant au fait que chaque groupe d'antennes dans l'ensemble d'activation de liaison montante réalise ou non une transmission de données ;
dans lequel dans un cas où l'ensemble d'activation de liaison montante comprend une pluralité de groupes d'antennes, et les informations de mesure comprennent une valeur de décalage de fréquence de chaque groupe d'antennes dans l'ensemble d'activation de liaison montante, l'unité de détermination est configurée pour :

dans un cas où une valeur absolue de la valeur de décalage de fréquence d'au moins un groupe d'antennes dans l'ensemble d'activation de liaison montante est supérieure ou égale à une première valeur de seuil prédéfinie, activer la fonction de transmission de données de liaison descendante sélective des groupes d'antennes ; ou
dans un cas où une valeur absolue d'une différence de la valeur de décalage de fréquence entre deux groupes d'antennes dans l'ensemble d'activation de liaison montante est supérieure ou égale à une seconde valeur de seuil prédéfinie, activer la fonction de transmission de données de liaison descendante sélective des groupes d'antennes ; ou
dans un cas où la valeur absolue de la valeur de décalage de fréquence d'au moins un groupe d'antennes dans l'ensemble d'activation de liaison montante est supérieure ou égale à une troisième valeur de seuil prédéfinie ainsi que la valeur absolue de la valeur de décalage de fréquence de l'au moins un groupe d'antennes n'est pas égale à la valeur de décalage de fréquence de l'au moins un groupe d'antennes, activer la fonction de transmission de données de liaison descendante sélective des groupes d'antennes.

Acquire status information on whether or not one or more antenna groups in the uplink activation set of the terminal perform the downlink data transmission

100

Transmit, according to the status information, the downlink data to the terminal on the antenna group, which needs to transmit the downlink data, in the uplink activation set

200

# FIG. 1

Monitor and update, at a high level, the uplink
activation set of each terminal — 21

Monitor the measurement information of each
terminal — 22

Determine,
according to the measurement information of
the each terminal, whether or not to enable the
selective downlink data transmission function
of the antenna groups — 23

No → Transmit the
downlink data
normally — 24

Yes

Transmit an instruction for enabling the selective
downlink data transmission function of the
antenna groups — 25

Performing, according to the instruction on a
downlink physical layer, transmitting-end
processing on data — 26

Transmit the downlink data processed from the
transmitting-end processing to a terminal — 27

**FIG. 2**

Determining module — 10

Transmitting module — 20

**FIG. 3**

Electronic device

Processor

Memory

41

40

Bus

43

Communications interface

42

**FIG. 4**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013301454 A1, SEOL JI-YUN
- US 2009016312 A1, TAO ZHIFENG
- US 2015341105 A1, YU CHIA-HAO